# EUROPEAN PATENT SPECIFICATION

(11) **EP 4 245 118 B1**
(45) Date of publication and mention of the grant of the patent: **06.11.2024**
(21) Application number: 22163042.9
(22) Date of filing: 18.03.2022
(51) Int. Cl.: A01D 41/14

(54) **HEADER WITH HEIGHT ADJUSTABLE INTAKE AUGER**
ERNTEVORSATZ MIT HÖHENVERSTELLBARER EINZUGSSCHNECKE
TÊTE DE COUPE AVEC VIS D'ALIMENTATION RÉGLABLE EN HAUTEUR

(43) Date of publication of application: 20.09.2023
(73) Proprietor: CNH Industrial Belgium N.V., 8210 Zedelgem (BE)
(72) Inventor: Ysebaert, Maarten, 8700 Tielt (BE); Lagaese, Niko, 8000 Brugge (BE); Borry, Stijn, 8740 Pittem (BE); Vandergucht, Yvan, 8647 Lo-Reninge (BE)
(74) Representative: CNH Industrial IP Department

(56) References cited:
- US-A1- 2016 165 798
- US-B2- 11 058 060
- US-B2- 11 272 665

## Description

### TECHNICAL FIELD

The present invention relates to a header for an agricultural harvester, the header comprising a header frame with a header floor and an intake auger, rotatably mounted to the header frame. The header further comprises an intake auger adjustment mechanism for adjusting a height of the intake auger relative to the header floor. The present invention further relates to an agricultural harvester, such as a combine harvester, comprising such a header.

### BACKGROUND

Many agricultural harvesters, including forage harvesters, agricultural balers, and combine harvesters use a header, sometimes called pick-up unit, that takes a crop from a field and moves it into a crop inlet of the harvester. Often, the header is wider than the crop inlet and an intake auger is used to laterally move the picked-up crop towards the crop inlet while being fed into the harvester.

For an optimal continuous crop flow into the crop inlet of the harvester, it is important that a clearance between the header floor and the auger has a suitable size. When the clearance is too small, the auger may be blocked by an excess of incoming crop. When the clearance is too large, the auger may need to gather enough crop first before being able to grab it and pull it towards the crop inlet. As a result, the crop will enter the harvester in a pulsed flow which can lead to inefficient processing inside the harvester.

In practice, the optimal auger height may depend on factors like crop type, crop density, or weather conditions. Some modern headers for combine harvesters therefore allow the user to adjust the auger height before harvesting. Usually, such auger height adjustment is a complex task requiring the user to first loosen a chain tensioner of a drive chain for the auger, to then loosen, readjust, and fasten the auger (at both auger ends), and finally to fasten and adjust the chain tensioner. This operation can easily take the user about 30 minutes and is thus not very suitable for frequent adjustment of the auger height.

US11058060B2 describes a draper header that is attached to a harvesting machine by an adapter including a bottom feed draper and an upper feed roller driven by a coupling from an output of the machine rotatable about an axis parallel to the forward direction and a right angle gearbox.

It is an aim of the present invention to address one or more disadvantages associated with the prior art.

### SUMMARY OF THE INVENTION

According to an aspect of the invention there is provided a header for an agricultural harvester, the header comprising a header frame with a header floor, an intake auger, rotatably mounted to the header frame, and an auger drive shaft, operatively connected to the intake auger for rotating the intake auger. The header further comprises an intake auger adjustment mechanism with a base plate supporting the intake auger. The base plate is pivotably mounted to the header frame for pivoting around a pivot axis and relative to the header frame to adjust a height of the intake auger relative to the header floor, the pivot axis coinciding with the auger drive shaft.

Because the pivot point of the base plate coincides with the auger drive shaft, the spatial relation between the drive shaft and the intake auger is not affected by the pivoting of the base plate. Apart from the pivoting of the base plate, no further adjustments are needed to continue operation.

In most embodiments of the header according to the invention, a drive chain or drive belt connects the auger drive shaft to the intake auger for rotating the intake auger. Additionally, a tensioner may be provided for tensioning the drive chain or drive belt and a guide element in the form of a chain guide or belt guide may be provided for guiding the movement of the drive chain or drive belt. The tensioner and/or the guide element are preferably mounted to the base plate for pivoting therewith, such that also their spatial and functional relation to the drive chain or drive belt is not affected by the pivoting of the base plate and the adjustment of the auger height.

An actuator is provided to pivot the base plate around the pivot axis. In exemplary embodiments, the actuator is an electric or hydraulic actuator. Such actuators may, for example, be operated by a user using control elements provided at the header itself, via a software-implemented user interface from the driver cabin of the agricultural harvester, or with the use of a mobile phone app. The actuator may, for example, comprise a linear actuator or an eccentric.

In an embodiment, the base plate is mounted to a first lateral end of the header frame and supports a first lateral end of the intake auger. The intake auger further comprises a second lateral end that is movably mounted to a second lateral end of the header frame and configured to move together with the first lateral end of the intake auger. A second base plate may be movably mounted to the second lateral end of the header frame and support the second lateral end of the intake auger. This second base plate may have a pivot axis that coincides with the auger drive shaft, such that the base plates at both lateral ends of the header frame can pivot together and in parallel. Alternatively, the second base plate is slidably mounted to the second lateral end of the header frame. Because of the relatively long width of the header relative to the typically small adjustment in auger height, the sliding motion of the second lateral end of the auger and the pivoting motion of the first lateral end of the auge can be combined without significantly displacing the auger horizontally.

A second actuator may be provided at the second lateral end of the header and configured to move the second lateral end of the intake auger together with the first later end of the auger. This will ensure that the auger is raised and lowered while maintaining substantially parallel to the header floor and may help to smoothly and reliably lift longer and heavier augers.

According to a further aspect of the invention, an agricultural harvester is provided comprising a header as described above. The agricultural harvester may, for example, be a combine harvester.

### BRIEF DESCRIPTION OF THE DRAWINGS

Embodiments of the invention will now be described by way of example with reference to the accompanying drawings, in which:
Figure 1 shows a combine harvester with a header wherein the current invention may be implemented.
Figures 2a and 2b respectively show a left side view and a right side view of a header with an intake auger adjustment mechanism according to the prior art.
Figure 3 shows a perspective view of a header with an intake auger adjustment mechanism according to an embodiment of the invention.
Figure 4 shows a left side view of the header of Figure 3.

### DETAILED DESCRIPTION

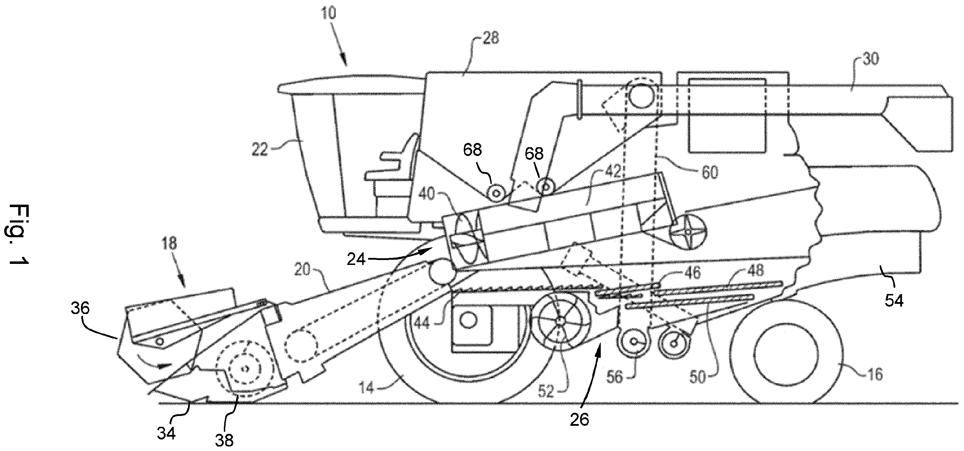

Figure 1 shows an agricultural harvester in the form of a combine harvester 10, which generally includes front and rear round engaging wheels 14, 16, a header 18, a feeder 20, an operator cabin 22, a threshing and separation system 24, a cleaning system 26, a grain tank 28 and an unloading tube 30. It should be appreciated that while the agricultural harvester is shown as a combine harvester 10, the agricultural harvester according to the present invention may be embodied by any construction that allows for crop material to be harvested, such as a conventional combine (which does not have a rotor), rotary combine, hybrid combine, chopper harvester, etc.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separating system 24.

The threshing and separating system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10. Grain and smaller elements of MOG (small MOG henceforth), such as chaff, dust and straw are small enough to pass through the perforations in the threshing concave 42 and are then discharged from the threshing and separation system 24.

Grain and small MOG that has successfully passed the threshing and separating system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

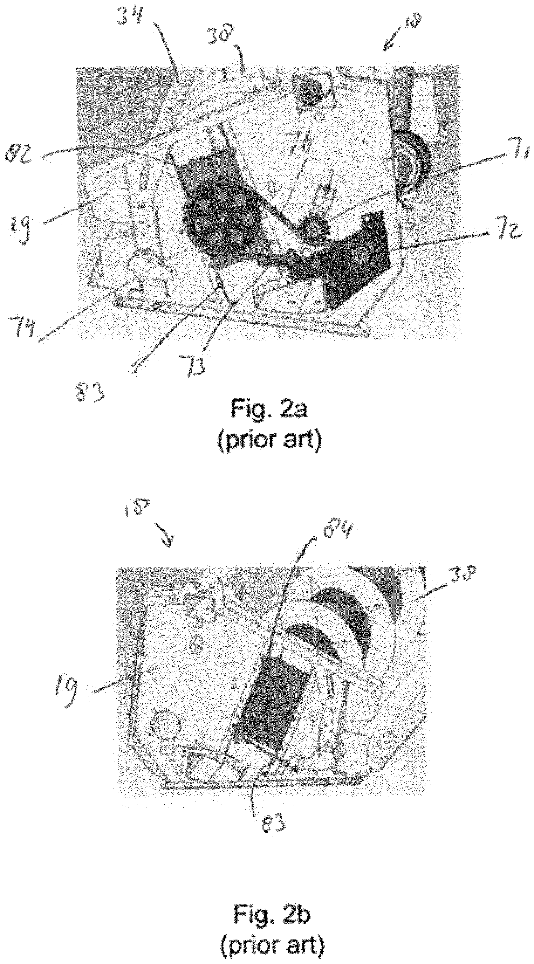

Figures 2a and 2b respectively show a left side view and a right side view of a header 18 with an intake auger adjustment mechanism according to the prior art. The auger 38 is supported by a header frame 19 that further carries a reciprocating knife 34 for cutting the crop during harvesting. A large auger sprocket 74 is mounted to the left lateral end of the auger 38 for rotation therewith. A support plate 82 is slidably mounted to the auger 38 in between the header frame 19 and the auger sprocket 74. In use, the support plate 82 is fixedly mounted between a pair of rails 83 on the header frame 19. When the header 18 is not in use, temporarily loosening the support plate 82 allows for sliding of the support plate 82 up or down along the rails 83 for adjusting the auger height. A similar support plate 84 and rails 83 are provided at the other, right side, end of the header frame 19. This makes it possible to equally adjust the auger height at both lateral ends of the header 18 and thereby ensure that the auger 38 remains parallel to the header floor.

A drive chain 76 engages the auger sprocket 74 and is driven by a smaller sprocket (not shown) mounted to a drive shaft 72 positioned closer to a rear surface of the header 18. The drive shaft 72 may, for example, be driven by an electric or hydraulic motor, but is typically mechanically driven via a coupling to a PTO on the feeder 20 of the combine harvester 10. A chain tensioner 71 is mounted to the header frame 19 and can be adjusted to control the chain tension and to ensure an efficient torque transfer between the drive shaft 72 and the auger sprocket 74. A chain guide 73 may be provided to guide the lower portion of the chain loop in the right direction just before it is caught by the teeth of the drive shaft sprocket. Chain tensioning may be needed, for example, when a length of the drive chain 76 changes due to wear, or when a distance between the auger sprocket 74 and the drive shaft 72 changes due to adjustment of the auger height. To allow the auger height to be adjusted, not just the support plate 82 but also the chain tensioner 76 and preferably the chain guide 73 need to be loosened. After bringing the auger 38 to the desired height, the chain guide 73, the chain tensioner 76 and the support plates 82, 84 all need to be fastened again.

In alternative embodiments, the sprockets 74 and drive chain 76 may be replaced by rollers and a drive belt. Belt tensioners and belt guides may be provided for tensioning the belt when needed.

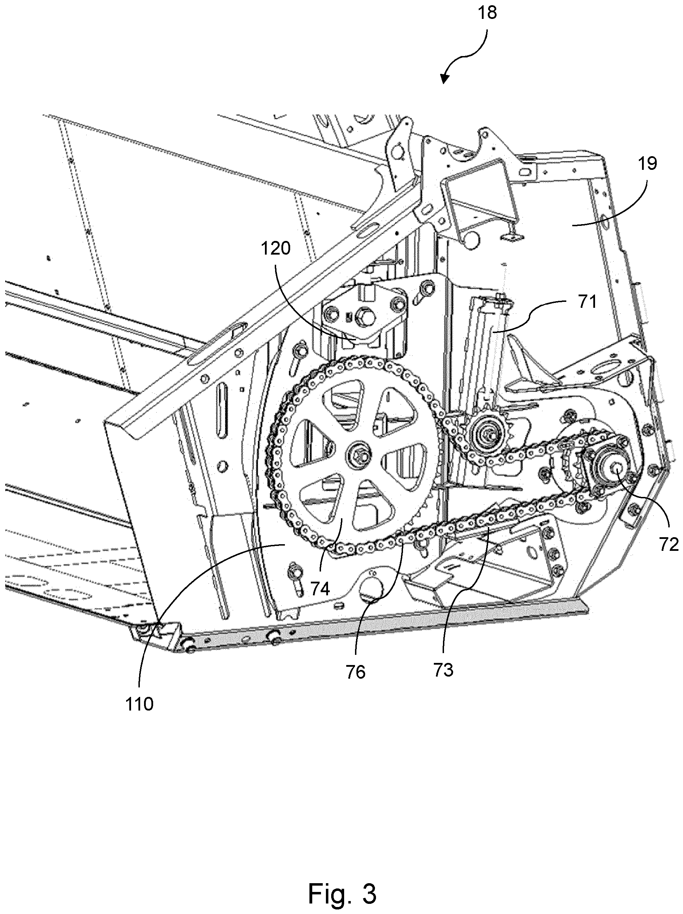

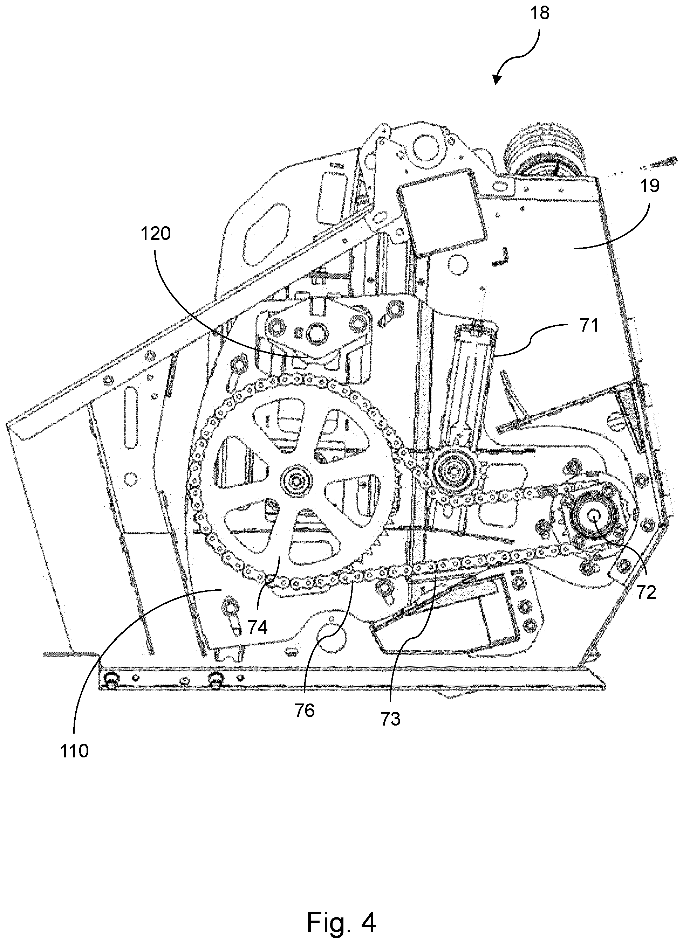

Figure 3 shows a perspective view of a header 18 with an intake auger adjustment mechanism according to an embodiment of the invention. Figure 4 shows a left side view of the header 18 of Figure 3. Figures 3 and 4 only show a left side panel of the header frame 19 together with some features needed for explaining the invention. It will, however, be clear to the skilled person how this left panel is connected to other parts of the header 18, such as the remaining parts of the header frame 19, the auger 38, and the cutter bar 34. It is further noted that in other embodiments the auger drive and auger adjustment mechanisms may be mounted to the right side panel of the header 18.

Like in the prior art shown in Figure 2a, the header of Figures 3 and 4 comprises an auger sprocket 74 that is driven by a drive shaft 72 via a drive chain 76. A chain tensioner 71 is provided for tensioning the drive chain 76 and a chain guide 73 for guiding the lower portion of the chain loop in the right direction just before it is caught by the teeth of the drive shaft sprocket. The intake auger adjustment mechanism of the header shown in Figures 3 and 4 comprises a base plate 110 that is pivotably mounted to the header frame 19. The auger 38 and the auger sprocket 74 are rotatably mounted to the base plate 110 and pivot together therewith. The pivot axis of the base plate 100 coincides with the auger drive shaft 72, such that the spatial relation between the drive shaft 72 and the auger sprocket 74 is not affected by the pivoting. Preferably, the chain tensioner 71 and the chain guide 73 are mounted to the base plate 110 too, such that apart from the pivoting of the base plate 110, no further adjustments are needed to adjust the auger height.

As shown in Figures 3 and 4, an actuator 120 is provided to pivot the base plate 110. The actuator may, for example, be an electric or hydraulic actuator. Such actuators may, for example, be operated by the user using control elements provided at the header 18 itself, via a software-implemented user interface from the driver cabin 22 of the agricultural harvester 10, or with the use of a mobile phone app. The actuator may, for example, comprise a linear actuator. In the embodiment shown here, the actuator 120 comprises an eccentric disc 120 that cooperates with a hole in the base plate 110. Rotation of the eccentric disc 120 alternately leads to raising and lowering of the hole. Because the base plate 110 is pivotably mounted to the header frame 19, the raising and lower of the hole leads to a pivoting motion of the base plate 110. The pivoting of the base plate 110 causes an arcuate motion of the auger sprocket 74 and the auger 38. However, because the drive shaft 72 and the auger sprocket 74 are positioned at a similar distance to the header floor, and because the range of motion of the base plate 110 is relatively small (typically less than 10°), the auger 38 primarily moves in a vertical direction and only slightly in the horizontal direction.

Possibly, at the other (not shown) lateral end of the header 18, a second base plate is movably mounted to the header frame side panel to support the other lateral end of the intake auger 38. This second base plate may have a pivot axis that coincides with the auger drive shaft 72, such that the base plates at both lateral ends of the header frame 19 can pivot together and in parallel. Alternatively, the second base plate is slidably mounted to the second lateral end of the header frame in a way similar to what is shown in Figure 2b. Because of the relatively long width of the header 18 and the primarily vertical motion of the first lateral end of the auger 38, the sliding motion of the second and the pivoting motion of the first lateral end can be combined without any problem and without misaligning the auger 38. A second actuator may be provided at the second lateral end of the header 18 and for moving both lateral ends of the intake auger 38 together. This will ensure that the auger is always raised and lowered while maintaining substantially parallel to the header floor and may help to smoothly and reliably lift longer and heavier augers.

In some headers, especially in some wider headers, the auger 38 may be supported in a third position at some point between its two lateral ends. This third position may, e.g., be in at centre of the auger 38. Alternatively, this third position may be positioned out-of-centre, for example to ensure that the crop flow into the feeder 20 is not obstructed. To allow this third support point to move up and down together with the lateral ends of the auger, this third support point may be provided on a pivotable or slidable base plate too.

## Claims

1. A header (18) for an agricultural harvester (10), the header (18) comprising:
a header frame (19) with a header floor,
an intake auger (38), rotatably mounted to the header frame (19),
an auger drive shaft (72), operatively connected to the intake auger (38) for rotating the intake auger (38), and
an intake auger adjustment mechanism comprising a base plate (110) supporting the intake auger (38) and pivotably mounted to the header frame (19) for pivoting around a pivot axis and relative to the header frame (19) to adjust a height of the intake auger (38) relative to the header floor, the pivot axis coinciding with the auger drive shaft (72), **characterised in that** the intake auger adjustment mechanism further comprises an actuator (120) configured to pivot the base plate (110) around the pivot axis.

2. A header (18) as claimed in claim 1, further comprising a drive chain (76) or drive belt, connecting the auger drive shaft (72) to the intake auger (38) for rotating the intake auger (38).

3. A header (18) as claimed in claim 2, further comprising a tensioner (71) for tensioning the drive chain (76) or drive belt, the tensioner (71) being mounted to the base plate (110) for pivoting therewith.

4. A header (18) as claimed in claim 2 or 3, further comprising a guide element (73) for guiding a movement of the drive chain (76) or drive belt, the guide element (73) being mounted to the base plate (110) for pivoting therewith.

5. A header (18) as claimed in any of the preceding claims, wherein the actuator (120) is an electric or hydraulic actuator.

6. A header (18) as claimed in any of the preceding claims, wherein the actuator (120) comprises an eccentric.

7. A header (18) as claimed in any of the preceding claims, wherein the base plate (110) is mounted to a first lateral end of the header frame (19) and supports a first lateral end of the intake auger (38), the intake auger (38) further comprising a second lateral end that is movably mounted to a second lateral end of the header frame (19) and configured to move together with the first lateral end of the intake auger (38).

8. A header (18) as claimed in claim 7, further comprising a second base plate, movably mounted to the second lateral end of the header frame (19) and supporting the second lateral end of the intake auger (38).

9. A header (18) as claimed in claim 8, wherein the second base plate is pivotably mounted to the second lateral end of the header frame (19), and wherein a pivot axis of the second base plate coincides with the auger drive shaft (72).

10. A header (18) as claimed in claim 8, wherein the second base plate is slidably mounted to the second lateral end of the header frame (19).

11. A header (18) as claimed in any of claims 7 to 10, wherein intake auger adjustment mechanism further comprises a second actuator configured to move the second lateral end of the intake auger (38) relative to the second lateral end of the header frame (19).

12. An agricultural harvester (10) comprising a header (18) as claimed in any of the preceding claims.

13. An agricultural harvester (10) as claimed in claim 12, wherein the agricultural harvester is a combine harvester (10).

## Patentansprüche

1. Erntevorsatz (18) für eine landwirtschaftliche Erntemaschine (10), wobei der Erntevorsatz (18) umfasst:
einen Erntevorsatzrahmen (19) mit einem Erntevorsatzboden,
eine Einzugsschnecke (38), die rotatorisch an dem Erntevorsatzrahmen (19) befestigt ist,
eine Schneckenantriebswelle (72), die wirkend mit der Einzugsschnecke (38) zum Rotieren der Einzugsschnecke (38) verbunden ist, und
einen Einzugsschnecken-Verstellmechanismus, der eine Grundplatte (110) umfasst, die die Einzugsschnecke (38) trägt und die schwenkbar an dem Erntevorsatzrahmen (19) befestigt ist, um um eine Schwenkachse und relativ zu dem Erntevorsatzrahmen (19) zu schwenken, um eine Höhe der Einzugsschnecke (38) relativ zu dem Erntevorsatzboden zu verstellen, wobei die Schwenkachse konzentrisch zu der Schneckenantriebswelle (72) ist,
**dadurch gekennzeichnet, dass** der Einzugsschnecken-Verstellmechanismus des Weiteren eine Betätigungseinrichtung (120) umfasst, die dazu eingerichtet ist, die Grundplatte (110) um die Schwenkachse zu schwenken.

2. Erntevorsatz (18) nach Anspruch 1, der des Weiteren eine Antriebskette (76) oder einen Antriebsriemen umfasst, die die Schneckenantriebswelle (72) mit der Einzugsschnecke (38) zum Rotieren der Einzugsschnecke (38) verbinden.

3. Erntevorsatz (18) nach Anspruch 2, der des Weiteren einen Spanner (71) zum Spannen der Antriebskette (76) oder des Antriebsriemens umfasst, wobei der Spanner (71) an der Grundplatte (110) befestigt ist, um mit dieser schwenkbar zu sein.

4. Erntevorsatz (18) nach Anspruch 2 oder 3, der des Weiteren ein Führungselement (73) zum Führen einer Bewegung der Antriebskette (76) oder des Antriebsriemens umfasst, wobei das Führungselement (73) an der Grundplatte (110) befestigt ist, um mit dieser schwenkbar zu sein.

5. Erntevorsatz (18) nach einem der vorhergehenden Ansprüche, wobei die Betätigungseinrichtung (120) eine elektrische oder eine hydraulische Betätigungseinrichtung ist.

6. Erntevorsatz (18) nach einem der vorhergehenden Ansprüche, wobei die Betätigungseinrichtung (120) einen Exzenter aufweist.

7. Erntevorsatz (18) nach einem der vorhergehenden Ansprüche, wobei die Grundplatte (110) an einem ersten lateralen Ende des Erntevorsatzrahmens (19) befestigt ist und ein erstes laterales Ende der Einzugsschnecke (38) abstützt, wobei die Einzugsschnecke (38) des Weiteren ein zweites laterales Ende aufweist, das bewegbar an einem zweiten lateralen Ende des Erntevorsatzrahmens (19) befestigt ist und dazu eingerichtet ist, sich zusammen mit dem ersten lateralen Ende der Einzugsschnecke (38) zu bewegen.

8. Erntevorsatz (18) nach Anspruch 7, der des Weiteren eine zweite Grundplatte umfasst, die bewegbar an dem zweiten lateralen Ende des Erntevorsatzrahmens (19) befestigt ist und das zweite laterale Ende der Einzugsschnecke (38) abstützt.

9. Erntevorsatz (18) nach Anspruch 8, wobei die zweite Grundplatte schwenkbar an dem zweiten lateralen Ende des Erntevorsatzrahmens (19) befestigt ist und wobei eine Schwenkachse der zweiten Grundplatte konzentrisch zu der Schneckenantriebswelle (72) ist.

10. Erntevorsatz (18) nach Anspruch 8, wobei die zweite Grundplatte verschiebbar an dem zweiten lateralen Ende des Erntevorsatzrahmens (19) befestigt ist.

11. Erntevorsatz (18) nach einem der Ansprüche 7 bis 10, wobei der Einzugsschnecken-Verstellmechanismus des Weiteren eine zweite Betätigungseinrichtung umfasst, die dazu eingerichtet ist, das zweite laterale Ende der Einzugsschnecke (38) relativ zu dem zweiten lateralen Ende des Erntevorsatzrahmens (19) zu bewegen.

12. Landwirtschaftliche Erntemaschine (10) mit einem Erntevorsatz (18) nach einem der vorhergehenden Ansprüche.

13. Landwirtschaftliche Erntemaschine (10) nach Anspruch 12, wobei die landwirtschaftliche Erntemaschine ein Mähdrescher (10) ist.

## Revendications

1. Organe de coupe (18) pour une moissonneuse agricole (10), l'organe de coupe (18) comprenant :
un châssis d'organe de coupe (19) avec un plancher d'organe de coupe,
une vis sans fin d'alimentation (38), montée de manière rotative sur le châssis d'organe de coupe (19),
un arbre d'entraînement de vis sans fin (72), raccordé fonctionnellement à la vis sans fin d'alimentation (38) pour faire pivoter la vis sans fin d'alimentation (38), et
un mécanisme de réglage de la vis sans fin d'alimentation comprenant une plaque de base (110) supportant la vis sans fin d'alimentation (38) et montée de manière pivotante sur le châssis d'organe de coupe (19) pour pivoter autour d'un axe de pivotement et par rapport au châssis d'organe de coupe (19) pour régler une hauteur de la vis sans fin d'alimentation (38) par rapport au plancher d'organe de coupe, l'axe de pivotement coïncidant avec l'arbre d'entraînement de vis sans fin (72),
**caractérisé en ce que** le mécanisme de réglage de la vis sans fin d'alimentation comprend en outre un actionneur (120) configuré pour faire pivoter la plaque de base (110) autour de l'axe de pivotement.

2. Organe de coupe (18) selon la revendication 1, comprenant en outre une chaîne d'entraînement (76) ou une courroie d'entraînement, raccordant l'arbre d'entraînement de vis sans fin (72) à la vis sans fin d'alimentation (38) pour faire pivoter la vis sans fin d'alimentation (38).

3. Organe de coupe (18) selon la revendication 2, comprenant en outre un tendeur (71) pour tendre la chaîne d'entraînement (76) ou la courroie d'entraînement, le tendeur (71) étant monté sur la plaque de base (110) pour pivoter avec celle-ci.

4. Organe de coupe (18) selon la revendication 2 ou la revendication 3, comprenant en outre un élément de guidage (73) permettant de guider un mouvement de la chaîne d'entraînement (76) ou de la courroie d'entraînement, l'élément de guidage (73) étant monté sur la plaque de base (110) pour pivoter avec celle-ci.

5. Organe de coupe (18) selon l'une quelconque des revendications précédentes, dans lequel l'actionneur (120) est un actionneur électrique ou hydraulique.

6. Organe de coupe (18) selon l'une quelconque des revendications précédentes, dans lequel l'actionneur (120) comprend un excentrique.

7. Organe de coupe (18) selon l'une quelconque des revendications précédentes, dans lequel la plaque de base (110) est montée sur une première extrémité latérale du châssis d'organe de coupe (19) et soutient une première extrémité latérale de la vis sans fin d'alimentation (38), la vis sans fin d'alimentation (38) comprenant en outre une seconde extrémité latérale qui est montée de manière mobile sur une seconde extrémité latérale du châssis d'organe de coupe (19) et configurée pour se déplacer conjointement avec la première extrémité latérale de la vis sans fin d'alimentation (38).

8. Organe de coupe (18) selon la revendication 7, comprenant en outre une seconde plaque de base, montée de manière mobile sur la seconde extrémité latérale du châssis d'organe de coupe (19) et soutenant la seconde extrémité latérale de la vis sans fin d'alimentation (38).

9. Organe de coupe (18) selon la revendication 8, dans lequel la seconde plaque de base est montée de manière pivotante sur la seconde extrémité latérale du châssis d'organe de coupe (19), et dans lequel un axe de pivotement de la seconde plaque de base coïncide avec l'arbre d'entraînement de vis sans fin (72).

10. Organe de coupe (18) selon la revendication 8, dans lequel la seconde plaque de base est montée de manière coulissante sur la seconde extrémité latérale du châssis d'organe de coupe (19).

11. Organe de coupe (18) selon l'une quelconque des revendications 7 à 10, dans lequel le mécanisme de réglage de la vis sans fin d'alimentation comprend en outre un second actionneur configuré pour déplacer la seconde extrémité latérale de la vis sans fin d'alimentation (38) par rapport à la seconde extrémité latérale du châssis d'organe de coupe (19).

12. Moissonneuse agricole (10) comprenant un organe de coupe (18) selon l'une quelconque des revendications précédentes.

13. Moissonneuse agricole (10) selon la revendication 12, dans laquelle la moissonneuse agricole est une moissonneuse-batteuse (10).
